# EUROPEAN PATENT SPECIFICATION

(11) **EP 2 011 240 B1**
(45) Date of publication and mention of the grant of the patent: **01.01.2014**
(21) Application number: 07719568.3
(22) Date of filing: 18.04.2007
(51) Int. Cl.: H04B 1/7073, G01S 19/24

(54) **METHODS AND SYSTEMS FOR SHARED SOFTWARE AND HARDWARE CORRELATORS**
VERFAHREN UND SYSTEME FÜR GEMEINSAM BENUTZTE SOFTWARE- UND HARDWARE-KORRELATOREN
PROCEDES ET SYSTEMES POUR DES CORRELATEURS MATERIELS ET LOGICIELS PARTAGES

(30) Priority: 18.04.2006 US 792622 P
(43) Date of publication of application: 07.01.2009
(73) Proprietor: SIGE Semiconductor Inc, Ottawa, Ontario K2H 8K7 (CA)
(72) Inventor: STRICKLAND, Stuart, Bishop's Stortford CM23 3SA (GB); TARLOW, Ben, London E17 3BL (GB)
(74) Representative: Lloyd, Patrick Alexander Desmond
(86) International application number: PCT/CA2007/000641
(87) International publication number: WO 2007/118327

(56) References cited:
- WO-A1-2004/038451
- WO-A2-02/01243
- WO-A2-03/023442
- US-B2- 7 002 515

## Description

### Field of the Invention

The invention relates to correlators used in radio receivers. In particular, the invention relates, but is not limited to hardware and software correlators that aid in acquiring and tracking satellite signals in global positioning type systems.

### Background of the Invention

The basic functionality of a receiver used in global positioning type systems is to calculate the latitude, longitude and altitude of the receiver's location (i.e., the co-ordinates of the receiver) upon receiving a number of signals from a network of satellites that orbit the earth. The calculation of the co-ordinates of the receiver relies on having acquired signals transmitted by orbiting satellites. After acquiring respective satellite signals, the receiver may track the transmission frequency and code phase of the satellite signals so as to maintain synchrony with signals received from the respective satellites.

During acquisition and tracking of a satellite signal a respective identification portion of the signal is correlated with known satellite signal identification information maintained by the receiver. This correlation process allows positive identification of the source of the received signal.

Current technologies use either hardware correlators or software correlators to acquire and track code division multiple access (CDMA) signals in global positioning systems.

An approach using only hardware correlators suffers from a lack of flexibility in strategy and in which type of satellite system signals are received. In addition, unless a very large number of hardware correlators are used, there may be a long signal acquisition time which can delay obtaining position information.

An approach using only software correlators suffers from an increase in power consumption and processor load.

Without sufficient power and processing resources available in the receiver, large amounts of data must be stored in memory for post processing. A disadvantage of this approach is that large amounts of memory are assigned and real-time position calculation and data demodulation may be compromised.

US7002515 B2 shows a global positioning system receiver, in which a CPU acts as a software correlating unit for synchronous acquisition while a hardware correlating section includes hardware units that execute correlating process for tracking the GPS satellites.

### Summary of the Invention

According to a broad aspect of the invention, there is provided a correlator architecture for use in a radio receiver comprising: at least one software correlator operable for at least one of acquiring and tracking a received signal; at least one hardware correlator operable for at least one of acquiring and tracking the received signal; and a signal path for passing the received signal to at least one of (i) the at least one software correlator and (ii) the at least one hardware correlator.

In some embodiments, the correlator architecture further comprises logic for dynamically selecting one or more of the at least one software correlator and the at least one hardware correlator to acquire the received signal.

In some embodiments, the correlator architecture further comprises logic for dynamically selecting one or more of the at least one software correlator and the at least one hardware correlator to track the received signal.

In some embodiments, the logic is operable to dynamically select one or more of the at least one software correlator and the at least one hardware correlator to acquire a received signal based on particular criteria.

In some embodiments, the logic is operable to dynamically select one or more of the at least one software correlator and the at least one hardware correlator to track a received signal based on particular criteria.

In some embodiments, the particular criteria comprise any one or more of: (i) type of the received signal; (ii) strength of the received signal; (iii) desirability for conservation of power or processing resources; (iv) desirability to provide continuous or momentary position calculations; (v) desirability to analyse the received signal for distortion; and (vi) type of global positioning navigation system with which the received signal is associated.

In some embodiments, the correlator architecture further comprises a detector for determining one or more of: (a) type of the received signal; b) received signal strength; and (c) type of global positioning navigation system with which the received signal is associated.

In some embodiments, one or more of the types of correlators is adapted to pass information to the other type of correlator.

In some embodiments, one of the types of correlators is adapted to acquire the received signal and pass information to the other type of correlator, wherein the other type of correlator is adapted to track the received signal based on the information.

In some embodiments, the correlator architecture further comprises determining logic for determining whether to pass information to the other type of correlator.

In some embodiments, the determining logic is operable to determine whether to pass information to the other type of correlator based on one or more of: (i) type of the received signal; (ii) strength of the received signal; (iii) desirability for conservation of power or processing resources; (iv) desirability to provide continuous or momentary position calculation; (v) desirability to analyse the received signal for distortion; and (vi) type of global positioning navigation system with which the received signal is associated.

In some embodiments, the signal path comprises a switch for selectively providing the received signal to either one of or both of: (i) the at least one software correlator; and (ii) the at least one hardware correlator.

In some embodiments, the logic for dynamically selecting controls the switch.

In some embodiments, the received signal includes one or more types of signals.

In some embodiments, at least one of the one or more types of signals are CDMA signals.

In some embodiments, the one or more types of signals comprises one or more of a group consisting of: a Global Positioning System (GPS) signal, a Galileo system signal, a Global Navigation Satellite System (GLONASS) signal and a Digital Broadcast Video - Handheld (DBV-H) signal.

In some embodiments, the correlator architecture further comprises a signal identifying labeller for assigning a timestamp to one or more samples of the received signal.

In some embodiments, the at least one software correlator is configured for signal acquisition and the at least one hardware correlator is configured for signal tracking.

In some embodiments, the correlator architecture further comprises an analog-to-digital convertor (ADC) located prior to the at least one hardware correlator and the at least one software correlator.

In some embodiments, a first ADC is located prior to the at least one hardware correlator and a second ADC is located prior to the at least one software correlator.

In some embodiments, the correlator architecture is used in a satellite receiver for acquiring and tracking satellite signals from a plurality of satellites forming at least part of a satellite based global positioning system.

In some embodiments, the satellite receiver further comprises circuitry located prior to the at least one hardware correlator and the at least one software correlator for down converting the received signal from a radio frequency signal (RF) to an intermediate frequency signal (IF).

According to another broad aspect of the invention, there is provided a method comprising: providing at least one software correlator and at least one hardware correlator; receiving a signal; and performing one or more of: (i) using at least one software correlator for at least one of acquiring and tracking the received signal; (ii) using at least one hardware correlator for at least one of acquiring and tracking the received signal.

In some embodiments, the method further comprises: dynamically selecting either one of or both of the at least one software correlator and the at least one hardware correlator to acquire the received signal.

In some embodiments, the method further comprises: dynamically selecting either one of or both of the at least one software correlator and the at least one hardware correlator to track the received signal.

In some embodiments, dynamically selecting either one of or both of the at least one software correlator and the at least one hardware correlator to acquire a received signal is performed based on particular criteria.

In some embodiments, dynamically selecting either one of or both of the at least one software correlator and the at least one hardware correlator to track a received signal is performed based on particular criteria.

In some embodiments, the particular criteria comprises any one or more of: (i) type of the received signal; (ii) strength of the received signal; (iii) desirability for conservation of power or processing resources; (iv) desirability to provide continuous or momentary position calculation; (v) desirability to analyse the received signal for distortion; and (vi) type of global positioning navigation system with which the received signal is associated.

In some embodiments, the method further comprises: determining any one or more of: (a) type of the received signal; (b) received signal strength; and (c) type of global positioning navigation system with which the received signal is associated.

In some embodiments, the method further comprises passing information from one or more correlator(s) of one type to one or more correlator(s) of the other type.

In some embodiments, following acquisition of the received signal by the at least one correlator of a type selected to acquire the received signal, the method further comprises: passing information to the at least one correlator of the other type of correlator, wherein the information is used by the other type of correlator to track the received signal.

In some embodiments, receiving a signal comprises receiving a signal which includes one or more types of signals.

In some embodiments, at least one of the one or more types of signals are CDMA signals.

In some embodiments, receiving a signal comprises receiving a signal which includes one or more types of signals consisting of: a Global Positioning System (GPS) signal, a Galileo system signal, a Global Navigation Satellite System (GLONASS) signal and a Digital Broadcast Video - Handheld (DBV-H) signal.

In some embodiments, one or more of the at least one software correlator post-processes a portion of the received signal.

In some embodiments, dynamically selecting either one of or both of the at least one software correlator and the at least one hardware correlator to acquire the received signal comprises selecting both of the at least one hardware correlator and the at least one software correlator.

In some embodiments, dynamically selecting either one of or both of the at least one software-correlator and the at least one hardware correlator to track the received signal comprises selecting both of the at least one hardware correlator and the at least one software correlator.

In some embodiments, dynamically selecting either one of or both of the at least one software correlator and the at least one hardware correlator to acquire the received signal comprises selecting fewer than a total number of available software correlators and/or hardware correlators to acquire the received signal.

In some embodiments, dynamically selecting either one of or both of the at least one software correlator and the at least one hardware correlator to track the received signal comprises selecting fewer than a total number of available software correlators and/or hardware correlators to track the received signal.

In some embodiments, when the at least one software correlator is dynamically selected to acquire the received signal, upon acquisition of the received signal the at least one software correlator provides the at least one hardware correlator with information used by the hardware correlator to track the acquired signal.

In some embodiments, when the at least one hardware correlator is dynamically selected to acquire the received signal, upon acquisition of the received signal the at least one hardware correlator provides the at least one software correlator with information used by the software correlator to track the acquired signal.

In some embodiments, the method further comprises downconverting the received signal from a radio frequency signal (RF) to an intermediate frequency signal (IF).

Embodiments of the present invention are applicable to any wireless receiver, to any form of wireless communication, including voice, data and other signals including positioning or navigation signals, and to any communication protocol, including CDMA, as well as others.

As used herein, the expression 'acquiring a received signal', generally refers to the function of a correlator in correlating a characteristic of a received signal with a known characteristic to identify the source of the signal or a parameter related thereto, and results in the receiver locking onto the signal. For example, in a generic radio receiver, e.g. a CDMA receiver, the correlation function is the process of aligning (correlating) the frequency peaks to a known combination or set of peaks (e.g. a known standard), and thereby deriving an understanding of the signal source (e.g. with whom the receiver is communicating). The acquisition function results in the receiver locking onto the channel. In CDMA telephony, this allows a connection to be established between a transmitter and receiver for communication between the two, and in GNSS, it allows the satellite transmitting the signal to be identified, which subsequently enables the position of the receiver to be determined. Thus, references to acquiring a signal generally also mean 'locking onto a signal'.

As used herein, the expression 'tracking a received signal' generally refers to maintaining lock on the signal with time once the receiver has acquired or locked onto the signal. For example, in CDMA telephony, this process maintains connection or linkage with the channel in the context of Doppler shifts and multipath effects. In GNSS, tracking the channel, or maintaining lock on the channel enables the position of the receiver to be repeatedly determined as the position changes with time, for instance.

Also according to the present invention, there is provided a correlator architecture for use in a radio receiver, comprising: at least one software correlator operable for at least one of locking onto and maintaining lock on a received signal; at least one hardware correlator operable for at least one of locking onto and maintaining lock on the received signal, and a signal path for passing the received signal to at least one of (i) the at least one software correlator and (ii) the at least one hardware correlator.

Also according to the present invention, there is provided a method comprising providing at least one software correlator and at least one hardware correlator: receiving a signal; and performing one or more of: (i) using at least one software correlator for at least one of locking onto and maintaining lock on the received signal; (ii) using at least one hardware correlator for at least one of locking onto and maintaining lock on the received signal.

Other aspects and features of the present invention will become apparent to those ordinarily skilled in the art upon review of the following description of specific embodiments of the invention in conjunction with the accompanying figures.

### Brief Description of the Drawings

Examples of embodiments of the invention will now be described with reference to the attached drawings, in which:
Figure 1 is a block diagram of an example receiver that may implement a shared hardware/software correlator architecture according to an embodiment of the present invention;
Figures 2A, 2B and 2C are block diagrams of a shared hardware/software correlator architecture according to various embodiments of the present invention;
Figure 3 is a flow diagram of a method of using a shared hardware/software correlator according to an embodiment of the present invention;
Figure 4 is a flow diagram of a method of using a shared hardware/software correlator according to another embodiment of the present invention; and
Figure 5 is a flow diagram of a method of using a shared hardware/software correlator according to another embodiment of the present invention.

### Detailed Description of Embodiments

A shared hardware/software correlator architecture is described herein for signal acquisition and tracking of satellite signals in global positioning navigation systems. Methods for using such architectures are also described.

The use of the methods and architecture may improve the acquisition and tracking capability of a CDMA receiver system as compared to either a hardware only correlator architecture or a software only correlator architecture. The use of the methods and architecture may improve acquisition and tracking performance of a Global Positioning System (GPS) or a similar type of satellite navigation receiver system as compared to either a hardware-only correlator architecture or a software-only correlator architecture. Other similar types of satellite navigation receiver systems include, for example, Global Navigation Satellite System (GLONASS) and Galileo. In some implementations, the methods and architecture described below enable acquisition and tracking of signals from more than one type of satellite system. In some implementations, signals from more than one type of satellite system may be received simultaneously and be applied to the combined hardware/software architecture.

Correlation tasks for acquisition and tracking cf signals may be shared between software and hardware correlators in the shared hardware/software architecture. In some implementations, other types of signals may be processed by the hardware and software correlators, for example signals used in Digital Video Broadcasting - Handheld (DVB-H).

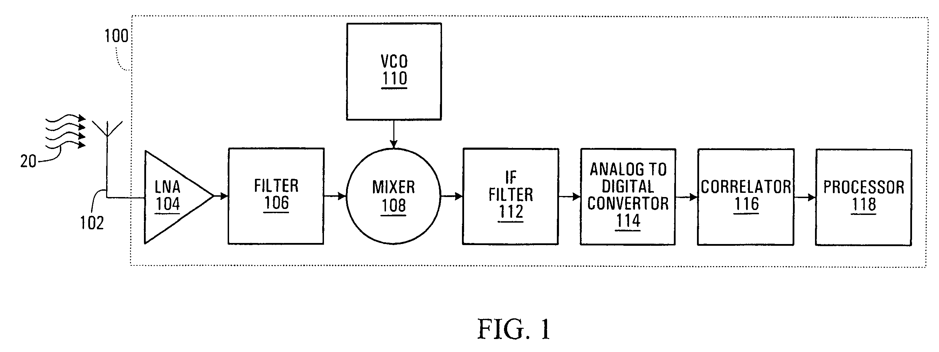

For the purposes of providing context for embodiments of the invention, an example of a receiver that could be used in implementing embodiments of the invention will now be described. Figure 1 shows a common receiver architecture for use in mobile communication applications. Figure 1 is a simplified block diagram of a conventional receiver 100 incorporating a superheterodyne (superhet) architecture. In Figure 1, the receiver 100 has a receiver front-end including an antenna 102, a Low Noise Amplifier (LNA) 104, an image-rejection filter 106, a mixer 108, a Voltage Controlled Oscillator (VCO) 110 and an Intermediate Frequency (IF) filter 112. In addition to the superhet architecture, the receiver is also shown to include an analog-to-digital convertor (ADC) 114, a correlator 116 and a processor 118.

In operation, a radio signal 20 at a radio frequency (RF) is first received by the antenna 102 and amplified by the LNA 104. For example, the radio signal may be a spread spectrum signal from a satellite that is part of a global positioning navigation system. Filter 106 then filters the radio signal 20. Requirement for this filter can be removed by integrating its function into the LNA 104 or the mixer 108. The mixer 108 down-converts the radio signal 20 from the RF to an intermediate frequency (IF) by using a local oscillator (LO) signal generated by the VCO 110. The output of the mixer 108 is provided to the IF filter 112. The IF filter 112 then filters the signal. The output of the IF filter 112 is coupled to the correlator 116 via the analog-to-digital convertor 114. An output of the correlator 116 is coupled to the processsor 118. The processor 118 performs the signal processing that ultimately determines the position of the receiver.

Satellite signals transmitted by the satellites are modulated in a manner whereby pseudo-random codes are employed to identify each of the orbiting satellites so as to aid in resolving the timing of the received signals. As such the signals are processed digitally by logic which performs a correlation function in the correlator 116. In the correlator 116 the processing gain applied to the spread spectrum signal raises the signal level above the noise floor when a local copy of the pseudo-random code specific to an individual satellite is placed in-phase with the received signal modulated with the same code. This correlation and synchronization process is carried out for all the received satellite signals in order to identify the strongest set of signals to be used to calculate the receiver's co-ordinates. The results are then passed from the correlator 116 to the processor 118 to determine the signal path delays to each of the satellites and hence enable calculation of the location of the receiver.

In another embodiment, the receiver of Figure 1 may be adapted for other communication applications such as voice and/or data. The processor may be configured as a Media Access Controller (MAC), and may interface with one or more other devices, such as a microphone, speaker, keyboard, mouse, or visual display. Acquisition or locking of the received signal may be performed by the correlator 116, which may include at least one hardware correlator and at least one software correlator. Tracking or maintaining lock on the received signal may also be performed by the correlator 116. In another embodiment, a software correlator may be implemented by the processor 118, either instead of or in addition to the correlator 116. The software correlator may be implemented as a program running on the processor. The software correlator may be configured to perform either one or both of locking onto the signal and maintaining lock on the signal. In some embodiments, the correlator 116 may be omitted and the correlation functions performed by the processor 118.

Figure 1 provides a specific example of a receiver that could be used to implement embodiments of the invention. It is to be understood that embodiments of the invention can be implemented with receivers having a different architecture than that of the specific example of Figure 1.

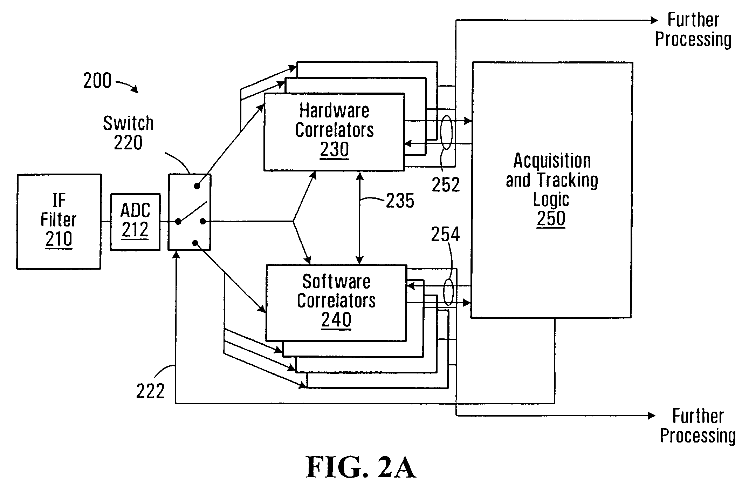

Figure 2A will now be used in describing a high-level view of a possible architecture for a shared software/hardware correlator 200. Figure 2A shows a portion of a receiver that includes an IF filter 210, an ADC 212, a switch 220, three hardware correlators 230, four software correlators 240, and acquisition and tracking logic 250.

While three hardware correlators and four software correlators are shown in Figure 2A, it is to be understood that the number of both hardware correlators and software correlators are implementation specific and can each vary in number. Furthermore, while the hardware and software correlators are shown as individual blocks representative of separate hardware devices and software processes, respectively, multiple hardware and software correlators can be implemented in a single hardware device (or structure) or single software process, respectively.

In operation, an IF signal is supplied to the IF filter 210 that has been down converted from an RF signal by a receiver front-end (not shown in Figure 2A). A specific example of the receiver front-end is described above with regard to Figure 1. After filtering by the IF filter 210, the IF signal is coupled to an input of the ADC 212. An output of the ADC 212 is coupled to the switch 220. A first output of the switch 220 is coupled to the hardware correlators 230. A second output of the switch 220 is coupled to both the hardware correlators 230 and the software correlators 240. A third output of the switch 220 is coupled to the software correlators 240. In some embodiments there may not be an output of the switch connected to both the hardware correlators 230 and the software correlators 240. Outputs of the hardware correlators 230 and the software correlators 240 are provided to a further stage of the receiver for additional processing. The hardware correlators 230 and the software correlators 240 are each coupled to an acquisition and tracking logic or module 250. For example, bi-directional communication is enabled between the acquisition and tracking logic 250 and the hardware correlators 230 as indicated at 252. Bi-directional communication is enabled between the acquisition and tracking logic 250 and the software correlators 240 as indicated at 254. The bi-directional communication is only shown for one hardware correlator of hardware correlators 230 and one software correlator of software correlators 240 in Figure 2A, but it is to be understood that in some implementations each of the hardware correlators 230 and the software correlators 240 would be likewise connected to the acquisition and tracking logic 250.

The hardware correlators 230 and the software correlators 240 are shown to be coupled together by link 235 to allow information to be provided by one type of correlator to the other type of correlator, for example, to allow information to be provided by one or more hardware correlator(s) to one or more software correlator(s) or vice versa. This will be described in further detail below. In some embodiments, the hardware correlators 230 and/or the software correlators 240, respectively control when they provide information to the other type of correlator. In some embodiments, the acquisition and tracking logic 250 controls information that is transferred from one type of correlator to the other.

The acquisition and tracking logic 250 is also coupled to the switch 220 as indicated at 222. Based on input from one of or both of the hardware correlators 230 and the software correlators 240, and/or other factor(s) such as, for example, the type of received satellite signal, the acquisition and tracking logic 250 controls operation of the switch 220 (e.g. via control path 222) so as to supply the IF signal to the appropriate type of correlator for acquiring and subsequent tracking of the signal. The input from one of or both of the hardware correlators 230 and the software correlators 240 may for example be an initial portion of the received signal. Further examples of other factors that may influence how the acquisition and tracking logic 250 controls operation of the switch 220 include: received signal strength; desirability for conservation of power or processing resources; desirability to provide continuous or momentary position calculation; and/or desirability to analyse received signal deeply for multipath or other types of distortion. The acquisition and tracking logic 250 may also be influenced in its decision of selecting software or hardware correlators based on the type of global positioning navigation system, for example GPS or Galileo, from which it is receiving signals.

In some embodiments, the acquisition and tracking logic 250 includes a detector (not shown). The detector may be used by the acquisition and tracking logic 250 to determine criteria such as one or more of the type of the received signal, received signal strength and the type of global positioning navigation system with which the received signal is associated. Output from the detector can then be used by the acquisition and tracking logic 250 in controlling the switch 220.

In some embodiments, the acquisition and tracking logic or module 250 is implemented in hardware. Examples of a hardware implementation include, but are not limited to, application specific integrated circuits (ASIC), field programmable gate arrays (FPGA) and firmware. In some embodiments the acquisition and tracking logic or module 250 is implemented in software. In some embodiments, the acquisition and tracking logic or module 250 is implemented in a combination of hardware and software.

The acquisition and tracking logic or module 250 is shown as an individual block representative of logic for both acquisition and tracking. However, it is to be understood that the acquisition and tracking logic 250 may be implemented in more than one logic module of hardware, software or a combination of the two. For example, acquisition functionality may be controlled by a first logic module and tracking functionality controlled by a second logic module.

The switch 220 may be used to switch between the IF filter output and any one of: the inputs to software and hardware correlators; the inputs to software correlators; and the inputs to hardware correlators. The switch can be implemented in software or hardware.

The ADC 212 may be of any type known to those skilled in the art.

In some embodiments hardware correlators can be physically implemented using techniques familiar to those skilled in the field of the invention. For example, application specific integrated circuits (ASIC) or field programmable gate arrays (FPGA) may be used to implement the hardware correlators. The hardware correlators may also include a numerically controlled oscillator used to determine frequency and code offsets and used to generate patterns of code for correlation. To implement the software correlators, in some embodiments a microprocessor capable of performing basic DSP operations is utilized.

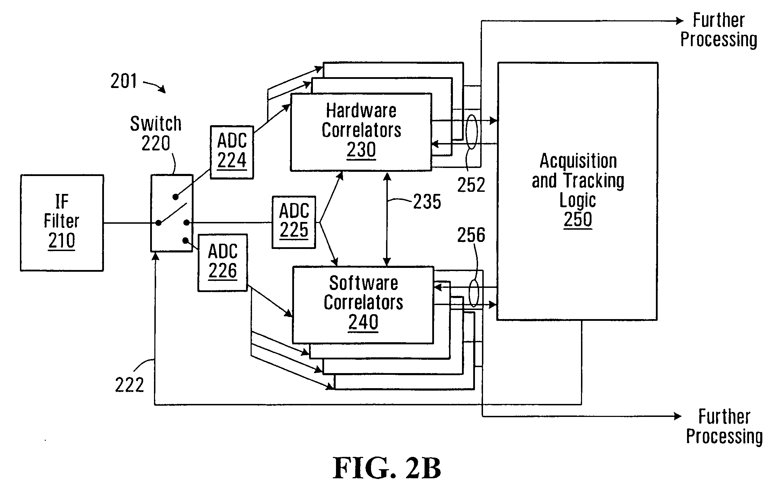

Figure 2B is another example of an architecture for a shared software/hardware correlator 201. The correlator 201 in Figure 2B is similar to the correlator 200 in Figure 2A, except that instead of a single ADC 212 between the IF filter 210 and the switch 220 as in Figure 2A, there is no ADC between the IF filter 210 and the switch 220, but there is instead a respective ADC coupled to each output of the switch 220. ADC 224 is located on a path between the switch 220 and inputs to the hardware correlators 230, ADC 225 is located on a path between the switch 220 and inputs to both the hardware correlator(s) 230 and software correlator(s) 240 and ADC 226 is located on a path between the switch 220 and inputs to the software correlator(s) 240. In some embodiments the three separate ADC 224,225,226 could be implemented as a single ADC for the three paths.

The description above with reference to Figures 2A and 2B describes the switch 220 as a physical component. A physical component switch is used in some embodiments of the invention, but in other embodiments no switch is used, as described below.

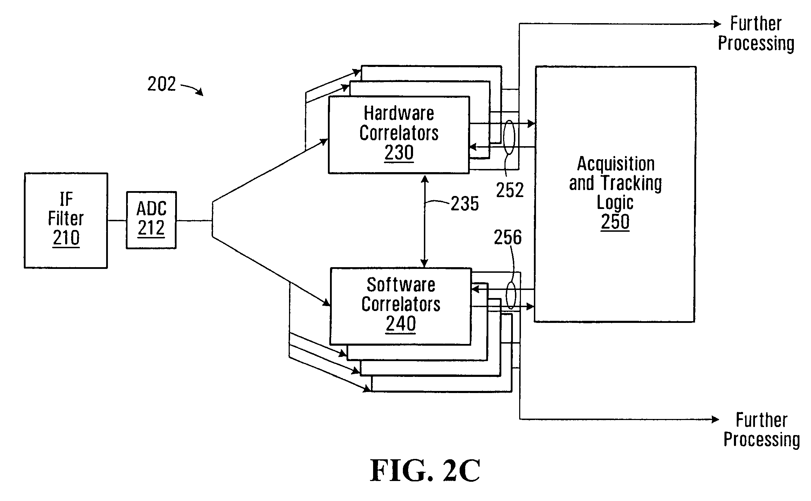

Figure 2C is an example of a further embodiment of the invention. A shared software/hardware correlator 202 in Figure 2C is similar to the above-described correlators, except that there is no switch located between the IF filter 210 and the hardware and software correlators 230,240. In the example of Figure 2C, output from the IF filter 210 is applied to both hardware correlators 230 and software correlators 240. In some embodiments, the hardware correlators 230 and software correlators 240 may be adapted to determine if use of one type of correlator is more advantageous for processing the signal than the other type. In some embodiments, the acquisition and tracking logic 250 determines if use of one type of correlator is more advantageous for processing the signal than the other type. Acquisition and tracking logic 250 may communicate such determinations to the hardware and software correlators 230,240 over links 252,254, respectively.

In some embodiments, the acquisition and tracking logic 250 includes a detector (not shown). The detector may be used by the acquisition and tracking logic 250 to determine criteria such as one or more of the type of the received signal, received signal strength and the type of global positioning navigation system with which the received signal is associated. Output from the detector can then be used by the acquisition and tracking logic 250 in determining if use of one type of correlator is more advantageous for processing the signal than the other type.

In some embodiments, input data is provided to both sets of correlators 230,240,and the acquisition and tracking logic 250 is adapted to ignore output from one of the sets of correlator(s) and use the output from the other set of correlator(s). In some embodiments, when both hardware and software correlators are supplied with the same received signal, the acquisition and tracking logic or module can aid in determining which type of correlator is used for acquisition and which type of correlator is used for tracking, that is which type of correlator output is ignored. The acquisition and tracking logic can also aid in determining when information is passed from one type of correlator and the other type of correlator, if and when the acquisition and tracking logic determines that a different type of correlator is to be used for a different task.

In some embodiments, the acquisition and tracking logic 250 calls a function to retrieve output data from the software correlators 240 when output from the software correlators 240 is to be used.

In some of the various embodiments described above, either with or without the use of a switch, the described architectures enable selection of output from the hardware correlators and the software correlators in a dynamic manner depending on factors that may influence acquisition and tracking logic. Examples of such factors have been described above.

With respect to Figures 2A, 2B and 2C, a correlator architecture can generally be described as including: at least one software correlator operable for at least one of acquiring and tracking a received signal; at least one hardware correlator operable for at least one of acquiring and tracking the received signal; and a signal path for passing the received signal to at least one of the at least one software correlator and the at least one hardware correlator. In some embodiments, the signal path includes a switch to route the received signal to one of (i) the software correlator(s) and (ii) the hardware correlator(s). In some embodiments, the switch may be switchable to route the signal to both the hardware correlator(s) and the software correlator(s). In some embodiments, the switch may be switchable between the hardware correlator(s) and both the hardware and software correlators. In other embodiments, the switch may be switchable between the software correlator(s) and both the hardware and software correlators. In some embodiments, there is no switch in the signal path and the received signal is provided to both the software and hardware correlators.

In some embodiments, not all the software correlators 240 and/or hardware correlators 230 available in the receiver are utilized at any given time. The acquisition and tracking logic 250 may determine that fewer than the number of available correlators are used in the acquisition and/or tracking processes.

Although many different strategies may be used for operating the shared hardware/software correlator architecture, in a particular implementation, a majority of the acquisition processing is carried out by the software correlators 240 and a majority of the signal tracking is carried out by the hardware correlators 230.

In some embodiments, upon successful acquisition of the signal, a transfer of information from the software correlators to the hardware correlators is performed. In some embodiments, link 235 in Figures 2A,2B,2C is used to facilitate such a transfer of information. In some embodiments, the transfer of information is controlled by the acquisition and tracking logic 250. In other embodiments, one or more of the hardware and software correlators are capable of controlling the transfer of information. The information may include timing and/or frequency information and may take any of a number of different forms. Examples of such information may include: Doppler shift of a satellite signal from a reference frequency; systematic Doppler shift from a reference frequency for all signals; a code phase (or time) offset applicable to an individual satellite signal; and/or a systematic time offset pertaining to a receiver oscillator.

The flexibility allowed by a shared software and hardware correlator architecture enables the receiver to process signals from two or more different types of satellite global positioning navigation systems. In some embodiments, the two or more different types of satellite global positioning navigation systems use different types of CDMA signals. In some embodiments, once the received RF signals are converted to IF signals, the IF signals can be processed simultaneously in hardware and software.

Strategically, using software correlators in addition to hardware correlators may be useful for a number of reasons. For example, the shared software/hardware correlator architecture may provide a) post-hoc improvement of accuracy of measurements; b) additional processing of IF signals when a position is requested by the user of a satellite navigation device; c) tracking recovery for a temporarily weak signal; d) flexibility of using an arbitrarily large number of software correlators to acquire very weak signals; e) detecting and mitigating the effects of multi-path signals; and/or f) using signals from more than one satellite navigation system.

In some embodiments, it is useful to use the software correlators when low signal levels are detected. Some of the reasons for this include: it is more economically cost effective to implement multiple software correlators for performing such a task than to implement multiple hardware correlators for performing the task, software correlators are potentially more flexible to reconfigure than hardware correlators, and processing can be performed as a post processing operation by software as opposed to real time processing by hardware.

Post-processing using software correlators allows the receiver to trade memory resources for processing load. For example, in some embodiments there are fewer constraints on how many software correlators are used at one time. This extra flexibility may improve power efficiency over a system using only hardware correlators.

In some embodiments, software correlators can be programmed to support navigation systems (or other systems, e.g. DVB-H) not supported by hardware correlators and perhaps systems not implemented at the time the hardware was created.

It may be useful to use the software correlators when a fast position fix is requested as it is possible to have a huge number of software correlators working at once, which as discussed above is less economically expensive than a similar number of hardware correlators being used as once.

The availability of software correlators for acquisition of weak signals allows a reduction in the number of hardware correlators in the receiver. As fewer hardware correlators are typically required to track previously acquired signals, an overall reduction in the number of hardware correlators reduces the cost of the receiver as the hardware correlators are typically more economically expensive to implement than software correlators.

In low power signal environments acquisition may be achieved by post-processing in software, or by simultaneously processing by a plurality of software and hardware correlators.

In some embodiments, if additional received signals are present and these received signals are of a different type from those for which the hardware correlators are designed, the system may then allow the software correlators to attempt to acquire one or more of these signals. In some embodiments, decisions of this type are made by the acquisition and tracking logic 250. In other embodiments a separate and distinct logic function from that of the acquisition and tracking logic 250 is used to determine how different signal types are handled by the software and hardware correlators.

In some embodiments of the invention, in an IF signal stream containing signals from more than one satellite system, the hardware correlators may acquire and track a first set of signals from a first satellite system and the software correlators may acquire and track a second set of signals from a second satellite system. For example, where one or more hardware correlators are tailored to correlate for a particular type of signal, for example GPS, the software correlators may be configured to correlate for additional types of signals, e.g., Galileo or GLONASS. For instance, in an environment where the hardware correlator is used for tracking a small number of GPS based satellites, it may be beneficial for the receiver to have additional measurements from Galileo based satellites to improve the position calculation.

It is to be understood that other combinations of sharing the acquisition and tracking.tasks for a single type of satellite signal or a collection of different types of satellite signals are within the scope of the invention. For example, with respect to the collection of different types of signals, embodiments may include using hardware correlators to acquire a first set of signals from a first satellite system, using software correlators to acquire a second set of signals from a second satellite system and using the hardware correlators to track both the first and second sets of signals.

In some situations signal tracking is less computer processing power-intensive than signal acquisition. Therefore, a short acquisition time may aid in decreasing power consumption depending on the received signal power level. In some embodiments, using extra data channels capable of operating on a single correlation data set, commonly known as correlator fingers, may be utilized to reduce the acquisition time. Extra correlator fingers are used when the IF signals are routed through multiple software correlators. By way of example, a receiver with 32 correlator fingers may be able to search simultaneously 32 different code offsets or frequency offsets or a mixture of the two.

In some embodiments, the use of hardware correlators during tracking reduces the processing load and allows more efficient continuous reporting of position fixes.

In some embodiments of the invention, it is easy to switch between various possible user modes. An example of a user mode is "low cost/low power" GPS in which there may be no tracking and either set of correlators may be employed to acquire signals for a position fix. Another example of a different user mode is "high-availability/high quality" GPS in which both sets of correlators may be used to perform acquisition and constant tracking of signals. Some user modes, such as those used for continuous navigation while tracking in a car, favour hardware correlators as this application uses a relatively modest number of correlators and typically does not lend itself to post-processing. Other user modes, for example in which initial acquisition of very weak signals is performed when assistance data is available (and no demodulation is required), favour software correlators since an arbitrarily large number of correlators may be applied or an arbitrarily large number of samples may be stored for post-processing. While there may be some embodiments in which particular user modes commonly use either or both of software or hardware correlators, it is to be understood that there is no fixed relationship between user modes and use of software or hardware correlators.

In some embodiments, the software correlators may be configured to correlate with one or more of a plurality of signals, having different frequencies and structures.

In some embodiments of the invention, IF signal samples may be assigned a label or timestamp before correlation. These identification labels may be used to identify the respective IF samples. Further to this, these labels may be used to identify or align corresponding samples from two or more different streams. The label or timestamp may be added to the IF signal by a signal identifying labeller located between the IF filter and the software and/or hardware labellers.

In some embodiments, with an addition of identification labels to each set of samples, the IF samples can be post processed by software correlators. In some embodiments, a timing-related message and/or a hardware pulse is supplied from one set of correlators to the other, either directly or through an intermediate set of interfaces. For example, if the software correlators acquire a signal, a code phase offset and a frequency offset of the signal is communicated to the hardware correlators in order for the hardware correlators to acquire and track the signal.

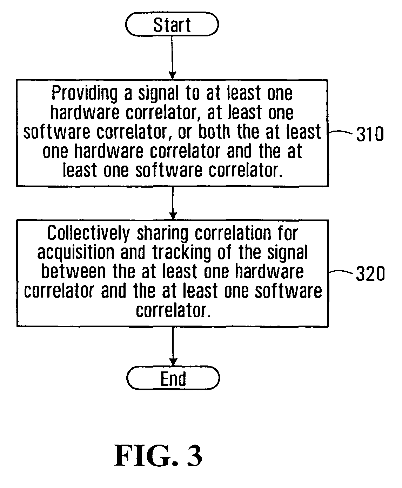

Figure 3 is a flow chart that describes a method for using a shared hardware/software correlator. A first step 310 of the method is providing a signal to at least one hardware correlator, at least one software correlator, or both the at least one hardware correlator and the at least one software correlator. A second step 320 of the method is collectively sharing correlation for the acquisition and tracking of the downconverted signal between the at least one hardware correlator and the at least one software correlator.

In some embodiments, collectively sharing correlation for the acquisition and tracking of the downconverted signal between the at least one hardware correlator and the at least one software correlator involves dynamically selecting either one of or both of the at least one software correlator and the at least one hardware correlator to acquire a received signal and dynamically selecting either one of or both of the at least one software correlator and the at least one hardware correlator to track the received signal.

In some embodiments of step 310, a switch is used to dynamically switch the signal to any one of the at least one hardware correlator, at least one software correlator, or both the at least one hardware correlator and the at least one software correlator.

In some embodiments of the invention, the method further includes receiving, downconverting and filtering an RF signal to an IF signal before providing the signal to the hardware and/or software correlators at step 310.

In some embodiments, the first step 310 of providing the signal involves acquisition and tracking logic determining whether the signal should be provided to the at least one hardware correlator, at least one software correlator, or both of the at least one hardware correlator and the at least one software correlator based on input from the at least one hardware correlator and the at least one software correlator, as well as other factors such as the type of received satellite signal.

In some embodiments, dynamically selecting either one of or both of the at least one software correlator and the at least one hardware correlator to acquire the received signal involves selecting fewer than a total number of available software correlators and/or hardware correlators to acquire the received signal. In some embodiments, dynamically selecting either one of or both of the at least one software correlator and the at least one hardware correlator to track the received signal comprises selecting fewer than a total number of available software correlators and/or hardware correlators to track the received signal.

In some embodiments, when the at least one software correlator is dynamically selected to acquire the received signal, upon acquisition of the received signal the at least one software correlator provides the at least one hardware correlator with information used by the hardware correlator to track the acquired signal. In some embodiments, when the at least one hardware correlator is dynamically selected to acquire the received signal, upon acquisition of the received signal the at least one hardware correlator provides the at least one software correlator with information used by the software correlator to track the acquired signal.

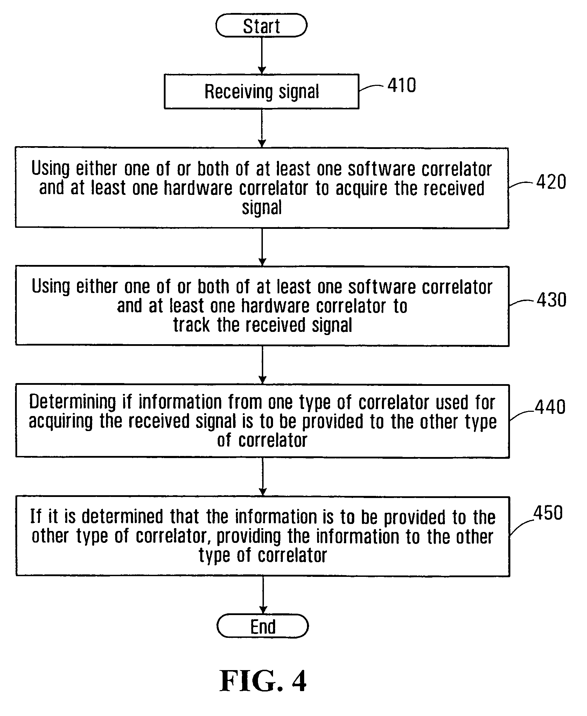

Referring to Figure 4, an example of a method according to an embodiment of the invention will now be described. At step 410 a first step involves receiving a signal a receiver. The signal may be a satellite signal from one or more types of global positioning navigation systems. Step 420 involves using either one of or both of at least one software correlator and at least one hardware correlator to acquire the received signal. Step 430 involves using either one of or both of the at least one software correlator and the at least one hardware correlator to track the received signal. Step 440 is a decision point in which it is determined whether information from a one type of correlator used for acquiring the received signal should be provided to the other type of correlator that is used for tracking the received signal. At step 450, if it is determined that the information is to be provided to the other type of correlator, it is provided to the other type of correlator for use in tracking the received signal.

Figure 4 is a particular example of steps that may be involved in a method of using a shared hardware/software correlator architecture. In some embodiments, the steps of determining whether information from a one type of correlator used for acquiring the received signal should be provided to the other type of correlator that is used for tracking the received signal and actually providing the information may not be performed. This may be implemented, for example, if it is predetermined that one of the types of correlators is used for both acquiring and tracking a particular type of received signal. In some embodiments, an additional step of the method may include post processing by software correlators as opposed to or in addition to real time processing by hardware correlators.

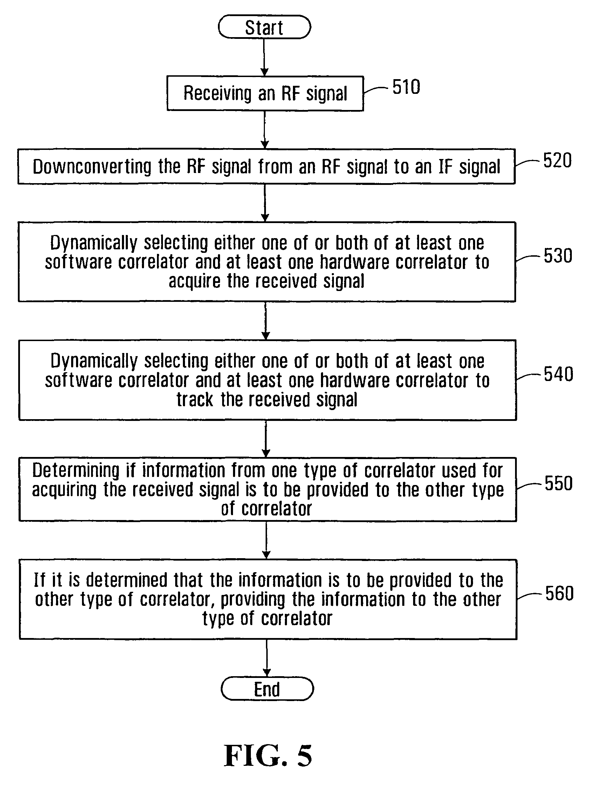

Referring to Figure 5, an example of a method according to a further embodiment of the invention will now be described. At step 510 a first step involves receiving an RF signal a receiver. The RF signal may be a satellite signal from one or more types of global positioning navigation systems. At step 520, the RF signal is downconverted from an RF signal to an IF signal. Step 530 involves dynamically selecting either one of or both of at least one software correlator and at least one hardware correlator to acquire the received signal. Step 540 involves dynamically selecting either one of or both of the at least one software correlator and the at least one hardware correlator to track the received signal. Step 550 is a decision point in which it is determined whether information from a one type of correlator used for acquiring the received signal should be provided to the other type of correlator that is used for tracking the received signal. At step 560, if it is determined that the information is to be provided to the other type of correlator, it is provided to the other type of correlator.

Figure 5 is a particular example of steps that may be involved in a method of using a shared hardware/software correlator architecture. In some embodiments, the steps of determining whether information from a one type of correlator used for acquiring the received signal should be provided to the other type of correlator that is used for tracking the received signal and actually providing the information may not be performed. This may be implemented, for example, if it is predetermined that one of the types of correlators is used for both acquiring and tracking a particular type of received signal. In some embodiments, an additional step of the method may include post processing by software correlators as opposed to real time processing by hardware correlators.

A particular use of embodiments of the invention as described herein is for multi-application, or multi-scheme receivers. By way of particular examples, receivers may be adapted to receive signals from both GPS and Galileo systems or signals from both GPS and DVB-H systems. In some embodiments, the implementation of the invention for multi-scheme applications is simpler for schemes that use frequencies that are relatively close to each other. For example, a timeslot scheme used by DVB-H gives a very natural, regular pattern for switching the software correlators between one application and another.

## Claims

1. A correlator architecture for use in a radio receiver comprising:
at least one software correlator operable to acquire and track a received signal;
at least one hardware correlator operable to acquire and track the received signal;
logic to dynamically select the at least one software correlator and/or the at least one hardware correlator to acquire the received signal based on particular criteria and to dynamically select the at least one software correlator and/or the at least one hardware correlator to track the received signal based on the particular criteria; and
a signal path for passing the received signal to at least one of the at least one software correlator and the at least one hardware correlator.

2. The correlator architecture of claim 1 wherein the particular criteria include one or more of type of the received signal, strength of the received signal, desirability for conservation of power or processing resources, desirability to provide continuous or momentary position calculations, desirability to analyse the received signal for distortion, and type of global positioning navigation system associated with the received signal.

3. The correlator architecture of claim 1 or claim 2 further comprising a detector for determining one or more of type of the received signal, received signal strength, and type of global positioning navigation system associated with the received signal.

4. The correlator architecture of claim 1 or claim 2 wherein one type of correlator is adapted to pass information to another type of correlator.

5. The correlator architecture of claim 4 wherein the one type of correlator is adapted to acquire the received signal and pass information to the other type of correlator and the other type of correlator is adapted to track the received signal based on the information.

6. The correlator architecture of claim 1 or claim 2 wherein the signal path Includes a switch for selectively providing the received signal to either one of or both of the at least one software correlator and the at least one hardware correlator.

7. The correlator architecture of claim 6 wherein the logic for dynamically selecting controls the switch.

8. A method of using a shared hardware/software correlator, the method comprising:
providing at least one software correlator and at least one hardware correlator;
receiving a signal: and
dynamically selecting the at least one software correlator and/or the at least one hardware correlator to acquire the received signal based on particular criteria and dynamically selecting the at least one software correlator and/or the at least one hardware correlator to track the received signal based on the particular criteria.

9. The method of claim 8 further comprising dynamically selecting both of the at least one software correlator and the at least one hardware correlator to acquire the received signal.

10. The method of claim 8 further comprising dynamically selecting both of the at least one software correlator and the at least one hardware correlator to track the received signal.

11. The method of any one of claims 8 to 10 further comprising passing Information from one or more correlators of one type to one or more correlators of another type.

12. The method of claim 9 wherein when the at least one software correlator is dynamically selected to acquire the received signal, upon acquisition of the received signal the at least one software correlator provides the at least one hardware correlator with information used by the at least one hardware correlator to track the acquired signal.

13. The method of claim 8 wherein the particular criteria includes one or more of type of the received signal, strength of the received signal, desirability for conservation of power or processing resources, desirability to provide continuous or momentary position calculation, desirability to analyze the received signal for distortion, and type of global positioning navigation system associated with the received signal.

## Patentansprüche

1. Korrelatorarchitektur zur Verwendung in einem Funkempfänger, die Folgendes umfasst:
wenigstens einen Software-Korrelator zum Erfassen und Verfolgen des empfangenen Signals;
wenigstens einen Hardware-Korrelator zum Erfassen und Verfolgen des empfangenen Signals;
Logik zum dynamischen Wählen des wenigstens einen Software-Korrelators und/oder des wenigstens einen Hardware-Korrelators zum Erfassen des empfangenen Signals auf der Basis bestimmter Kriterien und zum dynamischen Wählen des wenigstens einen Software-Korrelators und/oder des wenigstens einen Hardware-Korrelators, um das empfangene Signal auf der Basis der bestimmten Kriterien zu verfolgen; und
einen Signalpfad zum Leiten des empfangenen Signals zu dem wenigstens einen Software-Korrelator und/oder dem wenigstens einen Hardware-Korrelator.

2. Korrelatorarchitektur nach Anspruch 1, wobei die bestimmten Kriterien ein oder mehrere aus Typ des empfangenen Signals, Stärke des empfangenen Signals, Zweckmäßigkeit der Konservierung von Leistungs- oder Verarbeitungsressourcen, Zweckmäßigkeit der Bereitstellung von kontinuierlichen oder momentanen Positionsberechnungen, Zweckmäßigkeit des Analysierens des empfangenen Signals zur Verzerrung und Typ des mit dem empfangenen Signal assoziierten globalen Positionsnavigationssystems beinhalten.

3. Korrelatorarchitektur nach Anspruch 1 oder Anspruch 2, die ferner einen Detektor zum Ermitteln von einem oder mehreren aus Typ des empfangenen Signals, Stärke des empfangenen Signals und Typ des mit dem empfangenen Signal assoziierten globalen Positionsnavigationssystems umfasst.

4. Korrelatorarchitektur nach Anspruch 1 oder Anspruch 2, wobei ein Korrelatortyp so ausgelegt ist, dass er Informationen zu einem anderen Korrelatortyp leitet.

5. Korrelatorarchitektur nach Anspruch 4, wobei der eine Korrelatortyp so ausgelegt ist, dass er das empfangene Signal erfasst und Informationen zum anderen Korrelatortyp leitet, und der andere Korrelatortyp so ausgelegt ist, dass er das empfangene Signal auf der Basis der Information verfolgt.

6. Korrelatorarchitektur nach Anspruch 1 oder Anspruch 2, wobei der Signalpfad einen Schalter zum selektiven Anlegen des empfangenen Signals an einen oder an beide des wenigstens einen Software-Korrelators und des wenigstens einen Hardware-Korrelators beinhaltet.

7. Korrelatorarchitektur nach Anspruch 6, wobei die Logik zum dynamischen Auswählen den Schalter steuert.

8. Verfahren zum Benutzen eines gemeinsamen Hardware/Software-Korrelators, das Folgendes beinhaltet:
Bereitstellen von wenigstens einem Software-Korrelator und wenigstens einem Hardware-Korrelator;
Empfangen eines Signals; und
dynamisches Auswählen des wenigstens einen Software-Korrelators und/oder des wenigstens einen Hardware-Korrelators, um das empfangene Signal auf der Basis bestimmter Kriterien zu erfassen und den wenigstens einen Software-Korrelator und/oder den wenigstens einen Hardware-Korrelator dynamisch auszuwählen, um das empfangene Signal auf der Basis der bestimmten Kriterien zu verfolgen.

9. Verfahren nach Anspruch 8, das ferner das dynamische Auswählen sowohl des wenigstens einen Software-Korrelators als auch des wenigstens einen Hardware-Korrelators beinhaltet, um das empfangene Signal zu erfassen.

10. Verfahren nach Anspruch 8, das ferner das dynamische Auswählen sowohl des wenigstens einen Software-Korrelators als auch des wenigstens einen Hardware-Korrelators beinhaltet, um das empfangene Signal zu verfolgen.

11. Verfahren nach einem der Ansprüche 8 bis 10, das ferner das Leiten von Informationen von einem oder mehreren Korrelatoren von einem Typ zu einem oder mehreren Korrelatoren eines anderen Typs beinhaltet.

12. Verfahren nach Anspruch 9, wobei, wenn der wenigstens eine Software-Korrelator dynamisch zum Erfassen des empfangenen Signals ausgewählt wird, nach der Erfassung des empfangenen Signals der wenigstens eine Software-Korrelator dem wenigstens einen Hardware-Korrelator Informationen gibt, die von dem wenigstens einen Hardware-Korrelator zum Verfolgen des erfassten Signals verwendet werden.

13. Verfahren nach Anspruch 8, wobei die bestimmten Kriterien ein oder mehrere aus Typ des empfangenen Signals, Stärke des empfangenen Signals, Zweckmäßigkeit der Konservierung von Leistungs- oder Verarbeitungsressourcen, Zweckmäßigkeit der Bereitstellung von kontinuierlicher oder momentaner Positionsberechnung, Zweckmäßigkeit der Analyse des empfangenen Signals zur Verzerrung und Typ des mit dem empfangenen Signal assoziierten globalen Positionsnavigationssystems beinhaltet.

## Revendications

1. Architecture de corrélateurs destinée à être utilisée dans un récepteur radio comprenant ;
au moins un corrélateur logiciel exploitable pour acquérir et suivre un signal reçu ;
au moins un corrélateur matériel exploitable pour acquérir et suivre le signal reçu :
une logique pour sélectionner dynamiquement l'au moins un corrélateur logiciel et/ou l'au moins un corrélateur matériel pour acquérir le signal reçu en fonction de critères particuliers et sélectionner dynamiquement l'au moins un corrélateur logiciel et/ou l'au moins un corrélateur matériel pour suivre le signal reçu en fonction des critères particuliers ; et
un chemin de signal pour passer le signal reçu à au moins l'un de l'au moins un corrélateur logiciel et de l'au moins un corrélateur matériel.

2. Architecture de corrélateurs selon la revendication 1, dans laquelle les critères particuliers comportent un ou plusieurs du type du signal reçu, de la force du signal reçu, de l'adéquation de conserver la puissance ou les ressources de traitement, de l'adéquation de fournir des calculs de position continus ou momentanés, de l'adéquation d'analyser le signal reçu à la recherche d'une distorsion, et du type de système de positionnement global de navigation associé au signal reçu.

3. Architecture de corrélateurs selon la revendication 1 ou la revendication 2, comprenant en outre un détecteur pour déterminer un ou plusieurs du type du signal reçu, de la force du signal reçu et du type de système de navigation de positionnement associé au signal reçu.

4. Architecture de corrélateurs selon la revendication 1 ou la revendication 2, dans laquelle un type de corrélateur est adapté pour passer des informations à un autre type de corrélateur.

5. Architecture de corrélateurs selon la revendication 4, dans laquelle le premier type de corrélateur est adapté pour acquérir le signal reçu et passer des informations à l'autre type de corrélateur et l'autre type de corrélateur est adapté pour suivre le signal reçu en fonction des informations.

6. Architecture de corrélateurs selon la revendication 1 ou la revendication 2, dans laquelle le chemin de signal comporte un commutateur pour fournir sélectivement le signal reçu à l'un ou l'autre de l'au moins un corrélateur logiciel et de l'au moins un corrélateur matériel ou aux deux.

7. Architecture de corrélateurs selon la revendication 6, dans laquelle la logique de sélection dynamique commande le commutateur.

8. Procédé d'utilisation d'un corrélateur logiciel/matériel partagé, le procédé comprenant
la fourniture d'au moins un corrélateur logiciel et d'au moins un corrélateur matériel ;
la réception d'un signal ; et
la sélection dynamique de l'au moins un corrélateur logiciel et/ou de l'au moins un corrélateur matériel pour acquérir le signal reçu en fonction de critères particuliers et la sélection dynamique de l'au moins un corrélateur logiciel et/ou de l'au moins un corrélateur matériel pour suivre le signal reçu en fonction des critères particuliers.

9. Procédé selon la revendication 8, comprenant en outre la sélection dynamique des deux de l'au moins un corrélateur logiciel et de l'au moins un corrélateur matériel pour acquérir le signal reçu.

10. Procédé selon la revendication 8, comprenant en outre la sélection dynamique des deux de l'au moins un corrélateur logiciel et de l'au moins un corrélateur matériel pour suivre le signal reçu.

11. Procédé selon l'une quelconque des revendications 8 à 10, comprenant en outre le passage d'informations depuis un ou plusieurs corrélateurs d'un premier type à un ou plusieurs corrélateurs d'un autre type.

12. Procédé selon la revendication 9, dans lequel l'au moins un corrélateur logiciel est sélectionné dynamiquement pour acquérir le signal reçu, à l'acquisition du signal reçu l'au moins un corrélateur logiciel fournit à l'au moins un corrélateur matériel des informations servant à l'au moins un corrélateur matériel pour suivre le signal acquis.

13. Procédé selon la revendication 8, dans lequel les critères particuliers comportent un ou plusieurs du type du signal reçu, de la force du signal reçu, de l'adéquation de conserver la puissance ou les ressources de traitement, de l'adéquation de fournir des calculs de position continus ou momentanés, de l'adéquation d'analyser le signal reçu à la recherche d'une distorsion, et du type de système de positionnement global de navigation associé au signal reçu.
